# EUROPEAN PATENT APPLICATION

(11) **EP 4 696 557 A1**
(43) Date of publication of application: **18.02.2026**
(21) Application number: 24779045.4
(22) Date of filing: 29.02.2024
(51) Int. Cl.: B60P 1/16, B62D 5/07

(54) **TRANSPORT VEHICLE**

(30) Priority: 29.03.2023 JP 2023054324
(71) Applicant: Hitachi Construction Machinery Co., Ltd., Tokyo 110-0015 (JP)
(72) Inventor: NAKAMURA, Shingo, Tsuchiura-shi, Ibaraki 300-0013 (JP); SHIMOMURA, Hirokazu, Tsuchiura-shi, Ibaraki 300-0013 (JP)
(74) Representative: MERH-IP Matias Erny Reichl Hoffmann Patentanwälte PartG mbB
(86) International application number: PCT/JP2024/007586
(87) International publication number: WO 2024/202906

(57) **Abstract**

A transport vehicle includes a first control valve device that has a plurality of switching positions switched according to an operation of an operation device in an operation room and controls supply and discharge of hydraulic fluid to and from a hoist cylinder, a pilot circuit that generates a pilot pressure for driving the first control valve device from a pilot hydraulic fluid source, and a steering circuit including a steering cylinder that steers a steered wheel and an accumulator that stores a pressure available as an emergency hydraulic fluid source for the steering cylinder. The transport vehicle further includes a second control valve device provided on a connection line for connecting the steering circuit and the pilot circuit to each other, and a controller that controls the second control valve device according to the state of the pilot hydraulic fluid source. The second control valve device is switched by the controller between an interruption position where supply of the hydraulic fluid from the accumulator to the pilot circuit is interrupted and a supply position where the supply of the hydraulic fluid is allowed.

## Description

### Technical Field

The present invention relates to a transport vehicle such as a dump truck, and more particularly to a transport vehicle with a vessel that rises and falls by extension and contraction of a hoist cylinder.

### Background Art

A transport vehicle such as a dump truck is provided with a vessel that can rise and fall (tilt) on the vehicle body, and loads an object to be transported such as crushed stone and earth and sand on the vessel to perform transport work. The vessel is provided to the vehicle body such that the front side thereof can pivot in the vertical direction with the rear side thereof as a fulcrum. The vessel is pivoted upwardly by extending a hoist cylinder that is interposed between the vehicle body and the vessel and that can be extended and contracted. The transport vehicle is provided with a hydraulic system including a hydraulic fluid source that supplies hydraulic fluid to the hoist cylinder, and a control valve device that is disposed between the hydraulic fluid source and the hoist cylinder and controls supply and discharge of the hydraulic fluid to and from the hoist cylinder.

The control valve device that controls the extension and contraction of the hoist cylinder has four switching positions of a neutral position, a raising position, a lowering position, and a floating position. The neutral position is a position where the supply and discharge of the hydraulic fluid to and from the hoist cylinder is interrupted to stop the driving of the hoist cylinder. The raising position is a position where the hoist cylinder is extended by the supply and discharge of the hydraulic fluid to and from the hoist cylinder to pivot the vessel upwardly. The lowering position is a position where the hoist cylinder is contracted by the supply and discharge of the hydraulic fluid to and from the hoist cylinder to pivot the vessel downwardly. The floating position is a position where the hoist cylinder is contracted by discharging the hydraulic fluid from the hoist cylinder using the own weight of the vessel to permit the free fall of the vessel.

The control valve device for the hoist cylinder is selectively switched to any one of the above-described four switching positions according to an operation of an operation lever by an operator. The switching of the control valve device is of a hydraulic pilot type, and is performed by a pilot pressure output from a solenoid valve controlled according to the operation of the operation lever (see, for example, Patent Document 1).

### Prior Art Document

### Patent Document

Patent Document 1: WO 2018/051582

### Summary of the Invention

### Problems to be Solved by the Invention

In a case where the control valve device for the hoist cylinder is configured to be driven by inputting the pilot pressure as in the technology described in Patent Document 1, if a failure in which a hydraulic fluid source of the pilot pressure (for example, a pilot pump) loses the function of delivering the hydraulic fluid due to some factor, or a failure in which a prime mover for rotationally driving the pilot pump (the hydraulic fluid source of the pilot pressure) stops occurs, the pilot pressure is lost. In this case, from the viewpoint of safety or the like, the control valve device is switched to the neutral position. However, while a predetermined pilot pressure is not input thereafter, the vessel cannot be pivoted, and the vessel is maintained at the posture (position) at the time of the occurrence of the failure.

As means for controlling the posture of the vessel (hoist cylinder), the transport vehicle generally includes a manual switching valve arranged between the hydraulic fluid source and the hoist cylinder in addition to the control valve device described above. This manual switching valve enables the hoist cylinder to contract by discharging the hydraulic fluid from the hoist cylinder using the own weight of the vessel, and the free fall of the vessel is permitted. In a case where the above-described failure occurs when the vessel is in a rising state (inclined state), the vessel can be shifted from the inclined state to a falling state (seated state) by the own weight by manually operating the manual switching valve. Since the manual switching valve is arranged outside the operation room, it is necessary for the operator to move onto the vehicle body outside the operation room and operate the manual switching valve. However, since the transport vehicle with the vessel inclined is in an unstable posture, it is desirable for the operator to perform a switching operation of the control valve device in the operation room without moving to the outside of the operation room.

The present invention has been made to solve the above problems, and an object thereof is to provide a transport vehicle that enables an operator to perform a switching operation of a control valve device in an operation room even if an original pilot hydraulic fluid source used for driving the control valve device for a hoist cylinder loses the function thereof.

### Means for Solving the Problems

The present application includes a plurality of means for solving the above problems. An example thereof is a transport vehicle including: a hydraulic fluid source that supplies hydraulic fluid; a hoist cylinder that is extended and contracted by supply and discharge of the hydraulic fluid to allow a vessel to rise and fall; a hydraulic pilot type first control valve device that has a plurality of switching positions switched according to an operation of an operation device arranged in an operation room and controls a flow of the hydraulic fluid supplied from the hydraulic fluid source to the hoist cylinder and a flow of return fluid from the hoist cylinder to a hydraulic operating fluid tank; a pilot circuit that generates a pilot pressure for driving the first control valve device from a pilot hydraulic fluid source according to the operation of the operation device and inputs the pilot pressure to the first control valve device; a steering circuit including a steering cylinder that is extended and contracted by the hydraulic fluid supplied from the hydraulic fluid source to steer a steered wheel and an accumulator that stores a pressure of the hydraulic fluid supplied from the hydraulic fluid source and is capable of using the stored pressure as an emergency hydraulic fluid source for the steering cylinder, in which the transport vehicle includes: a connection line that connects the steering circuit and the pilot circuit to each other; a second control valve device that is provided on the connection line and is switched between an interruption position where supply of the hydraulic fluid from the accumulator to the pilot circuit is interrupted and a supply position where the supply of the hydraulic fluid from the accumulator to the pilot circuit is allowed; and a controller that controls the second control valve device based on a state of the pilot hydraulic fluid source.

### Advantages of the Invention

According to the present invention, since the second control valve device is provided on the connection line for connecting the steering circuit and the pilot circuit to each other, even if the original pilot hydraulic fluid source of the pilot circuit loses the function thereof, the accumulator of the steering circuit can be temporarily used as the pilot hydraulic fluid source of the pilot circuit by switching the second control valve device to the supply position. Therefore, even if the original function of the pilot hydraulic fluid source used for driving the first control valve device for the hoist cylinder is lost, the operator can perform the switching operation of the first control valve device by using the operation device in the operation room.

Problems, configurations, and effects other than those described above will be clarified by the following description of the embodiments.

### Brief Description of the Drawings

[FIG. 1] FIG. 1 is a side view for depicting a dump truck as a transport vehicle according to a first embodiment of the present invention.
[FIG. 2] FIG. 2 is a hydraulic circuit diagram for depicting a configuration of a hydraulic system provided in the transport vehicle according to the first embodiment depicted in FIG. 1.
[FIG. 3] FIG. 3 is a flowchart for depicting an example of a control procedure of a pilot pressure compensation control valve in a controller of the hydraulic system of the transport vehicle according to the first embodiment depicted in FIG. 2.
[FIG. 4] FIG. 4 is a schematic diagram for depicting a display device of the transport vehicle according to the first embodiment depicted in FIG. 2.
[FIG. 5] FIG. 5 is a diagram for depicting an example of a warning display displayed on the display device of the transport vehicle according to the first embodiment depicted in FIG. 4.
[FIG. 6] FIG. 6 is a diagram for depicting another example of a warning display displayed on the display device of the transport vehicle according to the first embodiment depicted in FIG. 4.
[FIG. 7] FIG. 7 is a hydraulic circuit diagram for depicting a configuration of a hydraulic system provided in a transport vehicle according to a second embodiment of the present invention.

### Modes for Carrying Out the Invention

Hereinafter, embodiments of a transport vehicle of the present invention will be described by using the drawings. In the present embodiment, a dump truck will be described as an example of the transport vehicle. It should be noted that the forward and rearward and leftward and rightward directions described in the specification are directions viewed from an operator on board the transport vehicle.

### [First Embodiment]

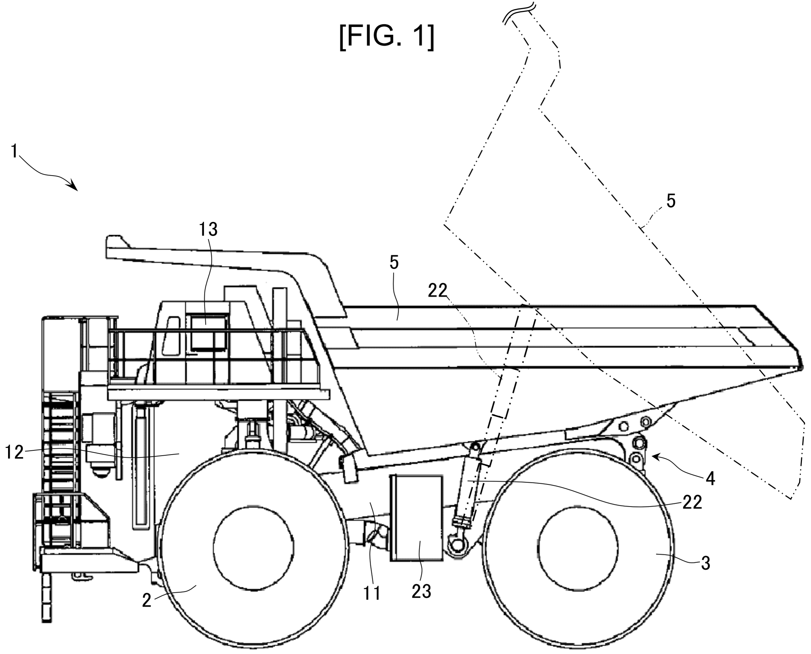

First, a configuration of a dump truck as a transport vehicle according to a first embodiment will be described by using FIG. 1. FIG. 1 is a side view for depicting a dump truck as a transport vehicle according to a first embodiment of the present invention.

In FIG. 1, a dump truck 1 is a large-sized transport vehicle operating in a mine or the like, and transports a cargo (object to be transported) such as mined ores and earth and sand. The dump truck 1 includes front wheels 2 and rear wheels 3 that are rotatably arranged on both left and right sides of the front and rear parts of the vehicle, a vehicle body 4 that can be traveled by the front wheels 2 and the rear wheels 3, and a vessel 5 that is mounted on the vehicle body 4 so as to be capable of rising and falling (tilting).

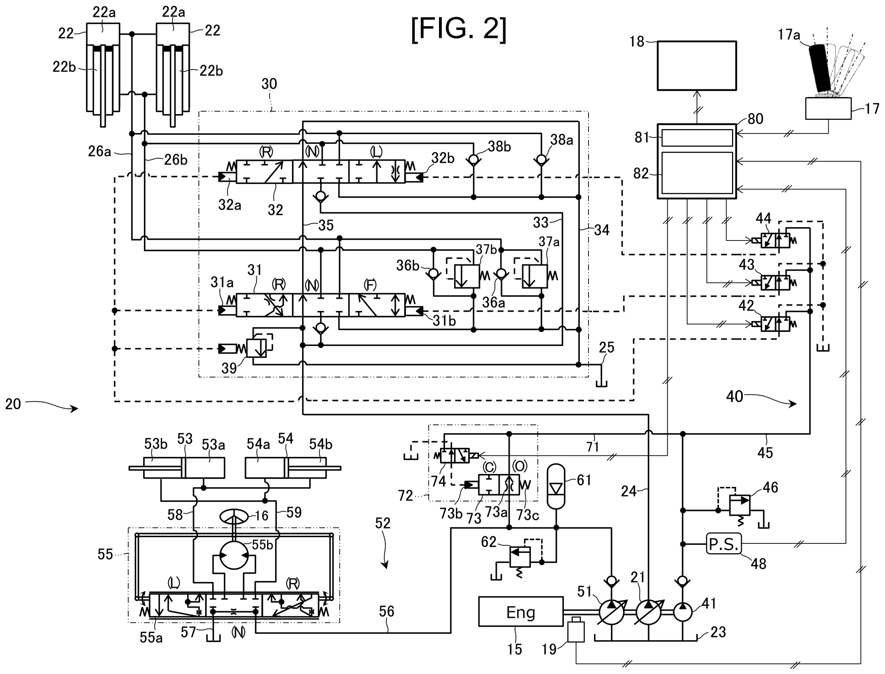

The front wheels 2 are, for example, steered wheels that are steered by the operator. The front wheels 2 as the steered wheels are configured to be steered by extension and contraction of left and right steering cylinders 53 and 54 (see FIG. 2 to be described later) to be described later. The rear wheels 3 are, for example, driven wheels that are rotatably driven by a travel drive device (not illustrated).

The vehicle body 4 includes a frame 11 that is a support structure extending in the forward and rearward directions (the lateral direction in FIG. 1), a building 12 arranged at a front portion of the frame 11, and a cab 13 arranged on the building 12. Various kinds of apparatuses such as a hydraulic operating fluid tank 23 (see FIG. 2 to be described later) are attached to the frame 11. The building 12 houses various devices such as a prime mover 15 and hydraulic pumps 21 and 51 (see FIG. 2 to be described later) to be described later. The cab 13 is an operation room on which the operator rides to control the vehicle. Various kinds of control apparatuses for the operator to control the dump truck 1 are arranged in the cab 13, such as a travelling pedal (not illustrated) for allowing the dump truck 1 to travel, a steering wheel 16 (see FIG. 2 to be described later) to be described later, for steering the front wheels 2 (steered wheels), an operation device 17 (see FIG. 2 to be described later) to be described later, for operating the rising and falling (posture) of the vessel 5, and a display device 18 to be described later, for displaying to control the dump truck 1.

The vessel 5 is a container for loading a cargo (object to be transported) such as ores and earth and sand. The rear side of the vessel 5 is rotatably attached to the rear end part of the frame 11 such that the front side thereof pivots in the vertical direction with the rear side thereof as a fulcrum. A pair of left and right hoist cylinders 22 (only one is illustrated in FIG. 1) is interposed between the frame 11 and the vessel 5. The hoist cylinders 22 are hydraulic actuators that are extended and contracted by supply and discharge of hydraulic fluid. The vessel 5 is configured to pivot with respect to the frame 11 between a transport posture in which the vessel 5 becomes a falling state (seated state) by contraction of the hoist cylinders 22 and is capable of loading the object to be transported, and a releasing posture in which the vessel 5 becomes a rising state (tilted state) by extension of the hoist cylinders 22 and the object to be transported can be released from the vessel 5. In FIG. 1, the vessel 5 indicated by a solid line is in the transport posture, while the vessel 5 indicated by a two-dot chain line is in the releasing posture. In addition, the hoist cylinder 22 indicated by a solid line is in a contracted state, while the hoist cylinder 22 indicated by a two-dot chain line is in an extended state.

Next, a configuration of a hydraulic system in the transport vehicle according to the first embodiment will be described by using FIG. 2. FIG. 2 is a hydraulic circuit diagram for depicting a configuration of a hydraulic system provided in the transport vehicle according to the first embodiment depicted in FIG. 1.

The dump truck 1 includes a hydraulic system 20 for allowing the vessel 5 to rise and fall and steering the front wheels 2. The hydraulic system 20 includes a first hydraulic pump 21 and a second hydraulic pump 51 as hydraulic fluid sources for supplying hydraulic fluid, the pair of hoist cylinders 22 driven by the hydraulic fluid supplied from the first hydraulic pump 21, a steering circuit 52 including a pair of left and right steering cylinders 53 and 54 driven by the hydraulic fluid supplied from the second hydraulic pump 51, and the hydraulic operating fluid tank 23 for storing return fluid discharged from the hoist cylinders 22 and the steering cylinders 53 and 54.

The first hydraulic pump 21 and the second hydraulic pump 51 suck hydraulic operating fluid from the hydraulic operating fluid tank 23 and deliver high-pressure hydraulic operating fluid (hydraulic fluid). The first hydraulic pump 21 and the second hydraulic pump 51 are, for example, variable displacement pumps and have a regulator (not illustrated) for adjusting the pump displacement. The first hydraulic pump 21 and the second hydraulic pump 51 are driven by, for example, the prime mover 15. The prime mover 15 is, for example, an engine or an electric motor. The prime mover 15 is provided with a speed sensor 19 for sensing the rotational speed of the prime mover 15. The speed sensor 19 outputs a sensed signal according to the sensed rotational speed of the prime mover 15 to a controller 80.

The hoist cylinders 22 are single-stage or multistage (a three-stage type in FIG. 1 and FIG. 2) hydraulic cylinders for allowing the vessel 5 (see FIG. 1) to rise and fall. The hoist cylinders 22 have bottom-side fluid chambers (hereinafter, referred to as bottom chambers) 22a and rod-side fluid chambers (hereinafter, referred to as rod chambers) 22b. The hoist cylinders 22 are extended when the hydraulic fluid is supplied to the bottom chambers 22a and the return fluid is discharged from the rod chambers 22b. The vessel 5 becomes the releasing posture by the extension of the hoist cylinders 22 (a two-dot chain line in FIG. 1). The hoist cylinders 22 are contracted when the hydraulic fluid is supplied to the rod chambers 22b and the return fluid is discharged from the bottom chambers 22a. The vessel 5 becomes the transport posture by the contraction of the hoist cylinders 22 (a solid line in FIG. 1).

The pair of hoist cylinders 22 is connected to the first hydraulic pump 21 and the hydraulic operating fluid tank 23 via a hoist control valve device 30. The hoist control valve device 30 controls the flow of the hydraulic fluid supplied from the first hydraulic pump 21 to the pair of hoist cylinders 22 and controls the flow of the return fluid discharged from the pair of hoist cylinders 22 to the hydraulic operating fluid tank 23. The hoist control valve device 30 is connected to the first hydraulic pump 21 via a first delivery line 24 and to the hydraulic operating fluid tank 23 via a first return line 25. In addition, the hoist control valve device 30 is connected to the bottom chambers 22a and the rod chambers 22b of the hoist cylinders 22 via a pair of actuator lines 26a and 26b.

The hoist control valve device 30 has four switching positions including a holding position, a raising position, a lowering position, and a floating position, and is configured to be switched to any one of the four switching positions according to an operation of the operation device 17 for the vessel 5 in the cab 13. The holding position is a position where the posture of the vessel 5 is held by interrupting the supply and discharge of the hydraulic fluid to and from the hoist cylinders 22. The raising position is a position where the hoist cylinders 22 are extended by the supply and discharge of the hydraulic fluid to and from the hoist cylinders 22 to pivot the vessel 5 upwardly. The lowering position is a position where the hoist cylinders 22 are contracted by the supply and discharge of the hydraulic fluid to and from the hoist cylinders 22 to pivot the vessel 5 downwardly. The floating position is a position where the hoist cylinders 22 are contracted by the own weight of the vessel 5 to permit the vessel 5 to fall by the own weight.

The hoist control valve device 30 is, for example, a combination of a first control valve 31 and a second control valve 32. Specifically, the hoist control valve device 30 has a first control valve 31, a second control valve 32, a high-pressure hydraulic line 33, a low-pressure hydraulic line 34, and a bypass hydraulic line 35. The first control valve 31 and the second control valve 32 are connected in parallel to each other via the high-pressure hydraulic line 33, the low-pressure hydraulic line 34, and the bypass hydraulic line 35.

The first control valve 31 and the second control valve 32 are configured with, for example, hydraulic pilot type directional control valves having six ports and three positions. The first control valve 31 has a pair of pressure-receiving sections 31a and 31b to which a pilot pressure is input, and is configured to be switched among three switching positions of a neutral position N, a raising position R, and a floating position F. The first control valve is switched from the neutral position N to the raising position R by the input of the pilot pressure to one pressure-receiving section 31a, and is switched from the neutral position N to the floating position F by the input of the pilot pressure to the other pressure-receiving section 31b. The second control valve 32 has a pair of pressure-receiving sections 32a and 32b to which the pilot pressure is input, and is configured to be switched among three switching positions of a neutral position N, a raising position R, and a lowering position L. The second control valve 32 is switched from the neutral position N to the raising position R by the input of the pilot pressure to one pressure-receiving section 32a, and is switched from the neutral position N to the lowering position L by the input of the pilot pressure to the other pressure-receiving section 32b.

The high-pressure hydraulic line 33 is connected to the first hydraulic pump 21 via the first delivery line 24. The low-pressure hydraulic line 34 is connected to the hydraulic operating fluid tank 23 via the first return line 25. When the first control valve 31 and the second control valve 32 are at the neutral position N, the bypass hydraulic line 35 brings the high-pressure hydraulic line 33 and the low-pressure hydraulic line 34 into a communication state. Accordingly, when the first control valve 31 and the second control valve 32 are at the neutral position N, the first hydraulic pump 21 becomes an unloaded state, and the delivery pressure thereof is maintained in a low pressure state close to the pressure of the hydraulic operating fluid tank 23.

The output side (actuator port side) of the first control valve 31 is connected to the bottom chambers 22a and the rod chambers 22b of the hoist cylinders 22 via the pair of actuator lines 26a and 26b. The output side (actuator port side) of the second control valve 32 is connected to the bottom chambers 22a and the rod chambers 22b of the hoist cylinders 22 via the pair of actuator lines 26a and 26b.

The low-pressure hydraulic line 34 and the pair of actuator lines 26a and 26b are connected to each other via make-up check valves 36a and 36b in a state of bypassing the first control valve 31. The check valve 36a permits the flow of the hydraulic operating fluid of the hydraulic operating fluid tank 23 from the low-pressure hydraulic line 34 to the bottom chambers 22a of the hoist cylinders 22 via the actuator line 26a, and blocks the flow in the reverse direction. The check valve 36b permits the flow of the hydraulic operating fluid of the hydraulic operating fluid tank 23 from the low-pressure hydraulic line 34 to the rod chambers 22b of the hoist cylinders 22 via the actuator line 26b, and blocks the flow in the reverse direction. The check valves 36a and 36b have a function of replenishing the hydraulic operating fluid to the bottom chambers 22a and the rod chambers 22b of the hoist cylinders 22 to prevent a negative pressure in the bottom chambers 22a and the rod chambers 22b.

In addition, the low-pressure hydraulic line 34 and the pair of actuator lines 26a and 26b are connected to each other via relief valves 37a and 37b in a state of bypassing the first control valve 31. The relief valves 37a and 37b prevent an overload of the hoist control valve device 30 and are connected in parallel with the make-up check valves 36a and 36b. The relief valve 37a is configured to open when an overload in the contraction direction acts on the hoist cylinders 22, and has a function of releasing an excess pressure in the bottom chambers 22a. The relief valve 37b is configured to open when an overload in the extension direction acts on the hoist cylinders 22, and has a function of releasing the excess pressure of the rod chambers 22a.

The low-pressure hydraulic line 34 and the pair of actuator lines 26a and 26b are connected to each other via make-up check valves 38a and 38b in a state of bypassing the second control valve 32. The check valve 38a permits the flow of the hydraulic operating fluid of the hydraulic operating fluid tank 23 from the low-pressure hydraulic line 34 to the bottom chambers 22a of the hoist cylinders 22 via the actuator line 26a, and blocks the flow in the reverse direction. The check valve 38b permits the flow of the hydraulic operating fluid of the hydraulic operating fluid tank 23 from the low-pressure hydraulic line 34 to the rod chambers 22b of the hoist cylinders 22 via the actuator line 26b, and blocks the flow in the reverse direction. The check valves 38a and 38b have a function of replenishing the hydraulic operating fluid to the bottom chambers 22a and the rod chambers 22b of the hoist cylinders 22 to prevent a negative pressure in the bottom chambers 22a and the rod chambers 22b.

A relief valve 39 capable of changing a relief set pressure is disposed between the bypass hydraulic line 35 and the low-pressure hydraulic line 34. The relief valve 39 is configured to open when the delivery pressure of the first hydraulic pump 21 reaches the set pressure. That is, the relief valve 39 regulates the maximum delivery pressure of the first hydraulic pump 21 and has a function of releasing the excess pressure of the hydraulic circuit to the hydraulic operating fluid tank 23.

The hydraulic system 20 includes a pilot circuit 40 that generates a pilot pressure for driving the pilot hydraulic type first control valve 31 and second control valve 32 configuring the hoist control valve device 30 from a pilot hydraulic fluid source according to an operation of the operation device 17 for the vessel 5, and inputs the pilot pressure to the pressure-receiving sections 31a and 31b of the first control valve 31 and the pressure-receiving sections 32a and 32b of the second control valve 32. The pilot circuit 40 has a pilot pump 41 driven by the prime mover 15, and three solenoid valves 42, 43, and 44 connected to the pilot pump 41 via a pilot line 45. A portion in the pilot line 45 between the pilot pump 41 and the solenoid valves 42, 43, and 44 is connected to the hydraulic operating fluid tank 23 via a pilot relief valve 46. The pilot pump 41 is a pilot hydraulic fluid source, and is, for example, a fixed displacement pump. The pilot relief valve 46 defines the maximum delivery pressure (the maximum pressure of the pilot line 45) of the pilot pump 41. The pilot line 45 is provided with a pressure sensor 48 for sensing the delivery pressure of the pilot pump 41 (the pressure of the pilot line 45). The pressure sensor 48 outputs a sensed signal according to the sensed delivery pressure of the pilot pump 41 to the controller 80.

The three solenoid valves 42, 43, and 44 switch between input of the pilot pressure to the hoist control valve device 30 (the first control valve 31 and the second control valve 32) and interruption of the input according to an operation of the operation device 17 for the vessel 5, so that the hoist control valve device 30 is switched to any one of the four switching positions (the holding position, the raising position, the lowering position, and the floating position). The respective solenoid valves 42, 43, and 44 output the pilot pressure generated from the hydraulic pressure of the pilot pump 41 according to a control signal (excitation current) from the controller 80.

The solenoid valve 42 is used for switching the hoist control valve device 30 to the raising position. In a case where a standby control signal (OFF signal) is input, one pressure-receiving section 31a of the first control valve 31 and one pressure-receiving section 32a of the second control valve 32 are communicated with the hydraulic operating fluid tank 23. In a case where a driving control signal (ON signal) is input, the pilot pressure is output to one pressure-receiving section 31a of the first control valve 31 and one pressure-receiving section 32a of the second control valve 32. The solenoid valve 43 is used for switching the hoist control valve device 30 to the floating position. In a case where a standby control signal (OFF signal) is input, the other pressure-receiving section 31b of the first control valve 31 is communicated with the hydraulic operating fluid tank 23. In a case where a driving control signal (ON signal) is input, the pilot pressure is output to the other pressure-receiving section 31b of the first control valve 31. The solenoid valve 44 is used for switching the hoist control valve device 30 to the lowering position. In a case where a standby control signal (OFF signal) is input, the other pressure-receiving section 32b of the second control valve 32 is communicated with the hydraulic operating fluid tank 23. In a case where a driving control signal (ON signal) is input, the pilot pressure is output to the other pressure-receiving section 32b of the second control valve 32. It should be noted that in a case where all of the three solenoid valves 42, 43, and 44 interrupt the input of the pilot pressure to the first control valve 31 and the second control valve 32, the first control valve 31 and the second control valve 32 are at the neutral position N.

The holding position of the hoist control valve device 30 is a position where the first control valve 31 and the second control valve 32 are at the neutral position N. The first control valve 31 at the neutral position N interrupts the connection between the first hydraulic pump 21 and the bottom chambers 22a and the rod chambers 22b of the hoist cylinders 22, and interrupts the connection between the bottom chambers 22a and the rod chambers 22b and the hydraulic operating fluid tank 23. Similarly, the second control valve 32 at the neutral position N interrupts the connection between the first hydraulic pump 21 and the bottom chambers 22a and the rod chambers 22b of the hoist cylinders 22, and interrupts the connection between the bottom chambers 22a and the rod chambers 22b and the hydraulic operating fluid tank 23. Therefore, the hoist cylinders 22 cannot be driven, and the posture of the vessel 5 is maintained.

The raising position of the hoist control valve device 30 is a position where the first control valve 31 is at the raising position R and the second control valve 32 is at the raising position R. The first control valve 31 at the raising position R connects the first hydraulic pump 21 and the bottom chambers 22a of the hoist cylinders 22 to each other, and connects the rod chambers 22b of the hoist cylinders 22 and the hydraulic operating fluid tank 23 to each other. The second control valve 32 at the raising position R connects the first hydraulic pump 21 and the bottom chambers 22a of the hoist cylinders 22 to each other, and interrupts the connection between the rod chambers 22b of the hoist cylinders 22 and the hydraulic operating fluid tank 23. Therefore, the hydraulic fluid from the first hydraulic pump 21 is supplied to the bottom chambers 22a of the hoist cylinders 22, the return fluid is discharged from the rod chambers 22b to the hydraulic operating fluid tank 23, and the hoist cylinders 22 are extended.

The lowering position of the hoist control valve device 30 is a position where the first control valve 31 is at the neutral position N and the second control valve 32 is at the lowering position L. The first control valve 31 at the neutral position N interrupts the connection between the first hydraulic pump 21 and the bottom chambers 22a and the rod chambers 22b of the hoist cylinders 22, and interrupts the connection between the bottom chambers 22a and the rod chambers 22b and the hydraulic operating fluid tank 23. The second control valve 32 at the lowering position L connects the first hydraulic pump 21 and the rod chambers 22b of the hoist cylinders 22 to each other, and connects the bottom chambers 22a of the hoist cylinders 22 and the hydraulic operating fluid tank 23 to each other. Therefore, the hydraulic fluid from the first hydraulic pump 21 is supplied to the rod chambers 22b of the hoist cylinders 22, the return fluid is discharged from the bottom chambers 22a to the hydraulic operating fluid tank 23, and the hoist cylinders 22 are contracted.

The floating position of the hoist control valve device 30 is a position where the first control valve 31 is at the floating position F and the second control valve 32 is at the neutral position N. The first control valve 31 at the floating position F connects the first hydraulic pump 21 and the hydraulic operating fluid tank 23 to each other, and connects the bottom chambers 22a of the hoist cylinders 22 and the hydraulic operating fluid tank 23 to each other. It should be noted that the connection between the rod chambers 22b of the hoist cylinders 22 and the first hydraulic pump 21 via the first control valve 31 at the floating position F is interrupted, and the connection between the rod chambers 22b of the hoist cylinders 22 and the hydraulic operating fluid tank 23 is interrupted. The second control valve 32 at the neutral position N interrupts the connection between the first hydraulic pump 21 and the bottom chambers 22a and the rod chambers 22b of the hoist cylinders 22, and interrupts the connection between the bottom chambers 22a and the rod chambers 22b and the hydraulic operating fluid tank 23. Therefore, the return fluid is discharged from the bottom chambers 22a of the hoist cylinders 22 to the hydraulic operating fluid tank 23 by the own weight of the vessel 5, the hydraulic operating fluid is supplied from the hydraulic operating fluid tank 23 to the rod chambers 22b of the hoist cylinders 22 via the make-up check valves 36b and 38b, and the hoist cylinders 22 are contracted.

The steering circuit 52 includes the pair of left and right steering cylinders 53 and 54, and a steering valve 55 for controlling the flow of the hydraulic fluid supplied from the second hydraulic pump 51 to the steering cylinders 53 and 54 and the flow of the return fluid discharged from the steering cylinders 53 and 54 to the hydraulic operating fluid tank 23. The steering valve 55 is connected to the second hydraulic pump 51 via a high-pressure line 56 and to the hydraulic operating fluid tank 23 via a low-pressure line 57. The steering valve 55 is also connected to the steering cylinders 53 and 54 via steering lines 58 and 59.

The left and right steering cylinders 53 and 54 are hydraulic actuators that are extended and contracted by the hydraulic fluid supplied from the second hydraulic pump 51, and steer the left and right front wheels 2. The left and right steering cylinders 53 and 54 have bottom-side fluid chambers (hereinafter, referred to as bottom chambers) 53a and 54a and rod-side fluid chambers (hereinafter, referred to as rod chambers) 53b and 54b, respectively. The bottom chamber 53a of the steering cylinder 53 on the left side and the rod chamber 54b of the steering cylinder 54 on the right side are connected to each other via the steering line 58. The rod chamber 53b of the steering cylinder 53 on the left side and the bottom chamber 54a of the steering cylinder 54 on the right side are connected to each other via the steering line 59.

The steering valve 55 has a directional control section 55a for controlling the flow direction (the bottom chambers 53a and 54a or the rod chambers 53b and 54b) of the hydraulic fluid supplied from the second hydraulic pump 51 to the left and right steering cylinders 53 and 54 and the flow direction of the return fluid discharged from the left and right steering cylinders 53 and 54 to the hydraulic operating fluid tank 23, and a flow rate adjusting section 55b for adjusting the flow rate of the hydraulic fluid supplied from the second hydraulic pump 51 to the left and right steering cylinders 53 and 54. The directional control section 55a is configured to be switched from a neutral position N to left and right steering positions L and R according to the rotational operation of the steering wheel 16. The flow rate adjusting section 55b is configured to adjust the flow rate of the hydraulic fluid (the hydraulic fluid supplied to left and right steering cylinders 53 and 54) flowing through the flow rate adjusting section 55b by the rotational operation of the steering wheel 16.

In the steering valve 55 depicted in FIG. 2, for example, when the steering wheel 16 is rotated counterclockwise, the directional control section 55a is switched to the steering position L on the left side. In this case, the hydraulic fluid of the second hydraulic pump 51 passes through the flow rate adjusting section 55b from the left side to the right side via the directional control section 55a at the steering position L on the left side. At this time, the flow rate of the hydraulic fluid is adjusted by the flow rate adjusting section 55b, and the hydraulic fluid is returned to the directional control section 55a. The hydraulic fluid returned to the directional control section 55a is supplied to the rod chamber 53b of the steering cylinder 53 on the left side and the bottom chamber 54a of the steering cylinder 54 on the right side via the steering line 59. On the other hand, the hydraulic fluid of the bottom chamber 53a of the steering cylinder 53 on the left side and the rod chamber 54b of the steering cylinder 54 on the right side is discharged from the steering line 58 to the hydraulic operating fluid tank 23 via the directional control section 55a of the steering valve 55. Accordingly, the left steering cylinder 53 is contracted, and the right steering cylinder 54 is extended, so that the left steering operation is performed according to the rotational operation of the steering wheel 16.

In addition, when the steering wheel 16 is rotated clockwise, the directional control section 55a is switched to the steering position R on the right side. In this case, the hydraulic fluid of the second hydraulic pump 51 passes through the flow rate adjusting section 55b from the right side to the left side via the directional control section 55a at the steering position R on the right side. At this time, the flow rate of the hydraulic fluid is adjusted by the flow rate adjusting section 55b, and the hydraulic fluid is returned to the directional control section 55a. The hydraulic fluid returned to the directional control section 55a is supplied to the bottom chamber 53a of the steering cylinder 53 on the left side and the rod chamber 54b of the steering cylinder 54 on the right side via the steering line 58. On the other hand, the hydraulic fluid of the rod chamber 53b of the steering cylinder 53 on the left side and the bottom chamber 54a of the steering cylinder 54 on the right side is discharged from the steering line 59 to the hydraulic operating fluid tank 23 via the directional control section 55a of the steering valve 55. Accordingly, the left steering cylinder 53 is extended and the right steering cylinder 54 is contracted, so that the right steering operation is performed according to the rotational operation of the steering wheel 16.

An accumulator 61 is connected to the high-pressure line 56. The accumulator 61 stores the pressure of the hydraulic fluid supplied from the second hydraulic pump 51. The high-pressure line 56 is connected to the hydraulic operating fluid tank 23 via the relief valve 62. The relief valve 62 defines the maximum pressure of the high-pressure line 56. Thus, the high-pressure line 56 is held at a predetermined pressure by the accumulator 61 and the relief valve 62. This allows the driving of the steering cylinders 53 and 54 according to an operation of the steering wheel 16 to be secured. The accumulator 61 is further configured such that the stored pressure thereof is available as an emergency hydraulic fluid source for the steering cylinders 53 and 54 in a case where the hydraulic fluid of the second hydraulic pump 51 cannot be supplied to the steering cylinders 53 and 54 due to a failure of the second hydraulic pump 51 or the like.

In the present embodiment, the steering circuit 52 is connected to the pilot circuit 40 via a connection line 71. Specifically, the high-pressure line 56 of the steering circuit 52 (a portion between the connection part with the accumulator 61 and the steering valve 55) is connected to the pilot line 45 of the pilot circuit 40 via the connection line 71.

A pilot pressure compensation control valve 72 is provided on the connection line 71. The pilot pressure compensation control valve 72 is configured to be switched between an interruption position where supply of the hydraulic fluid from the steering circuit 52 to the pilot circuit 40 is interrupted and a supply position where the supply of the hydraulic fluid from the steering circuit 52 to the pilot circuit 40 is allowed. The pilot pressure compensation control valve 72 enables the accumulator 61 as a safety device of the steering circuit 52 to be used as an emergency pilot hydraulic fluid source for the pilot circuit 40 when the pilot pump 41, which is the original pilot hydraulic fluid source of the pilot circuit 40, loses the function thereof, that is, when the delivery pressure of the pilot pump 41 is lowered.

The pilot pressure compensation control valve 72 has, for example, a pilot hydraulic type selector valve 73 disposed on the connection line 71 and a solenoid valve 74 capable of switching between input of the pilot pressure to the selector valve 73 and interruption of the input.

The selector valve 73 is configured to be switched, for example, between an open position O where supply of the hydraulic fluid from the steering circuit 52 to the pilot circuit 40 is allowed and communication in the connection line 71 is established, and a closed position C where the supply of the hydraulic fluid from the steering circuit 52 to the pilot circuit 40 is interrupted and the connection line 71 is closed. The selector valve 73 has a restrictor 73a at the open position O. The restrictor 73a of the selector valve 73 reduces the pressure of the high-pressure hydraulic fluid stored in the accumulator 61 and supplies it to the pilot circuit 40 to protect the pilot circuit 40. The selector valve 73 has a pressure-receiving section 73b on one side and a spring 73c on the other side. The selector valve 73 is configured to be switched to the closed position C when the pilot pressure is input to the pressure-receiving section 73b, and to be switched to the open position O by the spring 73c when the input of the pilot pressure to the pressure-receiving section 73b is interrupted (the pressure-receiving section 73b is communicated with the hydraulic operating fluid tank 23).

The solenoid valve 74 allows the hydraulic pressure from the pilot pump 41 to be input to the pressure-receiving section 73b of the selector valve 73 as the pilot pressure via the connection line 71. The solenoid valve 74 switches between input of the pilot pressure to the selector valve 73 and interruption of the input, according to a control signal (excitation current) from the controller 80. In a case where a standby control signal (OFF signal) is input, the solenoid valve 74 causes the pressure-receiving section 73b of the selector valve 73 to be communicated with the hydraulic operating fluid tank 23. In a case where a driving control signal (ON signal) is input, the solenoid valve 74 outputs the pilot pressure to the pressure-receiving section 73b of the selector valve 73.

The hydraulic system 20 is configured such that the hoist control valve device 30 is driven according to an operation of the operation device 17 for the vessel 5. The operation device 17 is configured with, for example, an electric lever device and has an operation lever 17a that is manually tilted by the operator. The operation device 17 is operable in any one of four operation positions of a holding position, a raising operation position, a floating operation position, and a lowering operation position corresponding to the respective switching positions of the hoist control valve device 30 (the holding position, the raising position, the floating position, and the lowering position). The operation lever 17a is normally arranged at the holding position. The operation device 17 outputs an operation signal according to the operation position to the controller 80.

The controller 80 can control the pilot pressure compensation control valve 72 based on the state of the pilot hydraulic fluid source. The state of the pilot hydraulic fluid source includes, for example, the flow rate of the pilot pump 41, the rotational speed of the pilot pump 41 (or may be the rotational speed of the prime mover 15), the delivery pressure of the pilot pump 41, and the pressure of the pilot line 45. The control target of the pilot pressure compensation control valve 72 by the controller 80 includes the switching position of the pilot pressure compensation control valve 72. The controller 80 is electrically connected to the operation device 17, and an operation signal of the operation device 17 is input thereto. The controller 80 directly controls the three solenoid valves 42, 43, and 44 according to the operation position (operation signal) of the operation device 17, thereby indirectly controlling the switching position of the hydraulic pilot type hoist control valve device 30 . The controller 80 is configured with a computer including, for example, a storage device 81 including a RAM, a ROM, and the like, and a processor 82 including a CPU, an MPU, and the like. The storage device 81 preliminarily stores a program and various kinds of information necessary for controlling the switching position of the hoist control valve device 30. The processor 82 reads the program and the various kinds of information from the storage device 81 appropriately and executes processing in accordance with the program, thereby realizing various kinds of functions. It should be noted that the controller 80 may be configured with one computer or a plurality of computers.

When the operation lever 17a of the operation device 17 is operated to the raising operation position, the controller 80 outputs a control signal of an ON signal (excitation current) to the solenoid valve 42 and outputs a control signal of an OFF signal to the solenoid valves 43 and 44 other than the solenoid valve 42. This causes the pilot pressure from the solenoid valve 42 to be input to one pressure-receiving section 31a of the first control valve 31 and one pressure-receiving section 32a of the second control valve 32, and causes each of the first control valve 31 and the second control valve 32 to be switched to the raising position R. Accordingly, the hoist cylinders 22 are extended to bring the vessel 5 into the releasing posture (tilted state).

When the operation lever 17a is operated to the lowering operation position, the controller 80 outputs a control signal of an ON signal (excitation current) to the solenoid valve 44 and outputs a control signal of an OFF signal to the solenoid valves 42 and 43 other than the solenoid valve 44. Accordingly, the pilot pressure from the solenoid valve 44 is input to the other pressure-receiving section 32b of the second control valve 32 to switch the second control valve 32 to the lowering position L, and the first control valve 31 is maintained at the neutral position N. Accordingly, the hoist cylinders 22 are contracted to bring the vessel 5 into the transport posture (falling state).

When the operation lever 17a is operated to the floating operation position, the controller 80 outputs a control signal of an ON signal (excitation current) to the solenoid valve 43 and outputs a control signal of an OFF signal to the solenoid valves 42 and 44 other than the solenoid valve 43. Accordingly, the pilot pressure from the solenoid valve 43 is input to the other pressure-receiving section 31b of the first control valve 31 to switch the first control valve 31 to the floating position F, and the second control valve 32 is maintained at the neutral position N. Therefore, the hydraulic fluid from the first hydraulic pump 21 is returned to the hydraulic operating fluid tank 23 via the first control valve 31 at the floating position F and the second control valve 32 at the neutral position N. In this case, the bottom chambers 22a of the hoist cylinders 22 are in communication with the hydraulic operating fluid tank 23 via the first control valve 31 at the floating position F. Thus, the hydraulic fluid in the bottom chambers 22a of the hoist cylinders 22 is discharged to the hydraulic operating fluid tank 23 via the first control valve 31 at the floating position F by the own weight of the vessel 5, and the hoist cylinders 22 are contracted.

In a case where the operation lever 17a is at the holding position (neutral position), the controller 80 outputs a control signal of an OFF signal to each of the solenoid valves 42, 43, and 44. This causes the first control valve 31 and the second control valve 32 to be maintained at the neutral position N without input of the pilot pressure. Therefore, the hydraulic fluid from the first hydraulic pump 21 is returned to the hydraulic operating fluid tank 23 via the first control valve 31 and the second control valve 32 at the neutral position N. In addition, the first control valve 31 and the second control valve 32 at the neutral positions N prevent discharge from the bottom chambers 22a and the rod chambers 22b of the hoist cylinders 22 to the hydraulic operating fluid tank. That is, the hoist cylinders 22 can't be extended or contracted.

As described above, the extension/contraction operation of the hoist cylinders 22 is performed by switching of the hoist control valve device 30 via the control of each of the solenoid valves 42 to 44 by the controller 80. However, in a case where a failure in which the prime mover 15 or the pilot pump 41 unintentionally stops due to some factor occurs, supply of the hydraulic fluid to the pilot circuit 40 stops. Accordingly, since it becomes impossible to input the pilot pressure to the first control valve 31 and the second control valve 32 of the hoist control valve device 30 from each of the solenoid valves 42 to 44, the first control valve 31 and the second control valve 32 are at the neutral position N (the hoist control valve device 30 is at the holding position) even if the operation lever 17a of the operation device 17 is at any operation position. In this case, it becomes impossible to perform the extension/contraction operation of the hoist cylinders 22, and the vessel 5 is held in the posture at the time when the above-described failure occurs. In a case where the above-described failure occurs when the vessel 5 is in the releasing posture (rising state), the dump truck 1 is in an unstable posture in which the center of gravity is relatively raised. Therefore, it is necessary to shift the vessel 5 from the inclined state to the falling state.

Therefore, the controller 80 of the present embodiment controls the display device 18 to display a warning display for warning of an abnormality and also performs the switching control of the pilot pressure compensation control valve 72 in order to enable the posture of the vessel 5 to be changed, when detecting the abnormality in the rotational speed of the prime mover 15 or the abnormality in the delivery pressure of the pilot pump 41. The controller 80 is electrically connected to the speed sensor 19 and the pressure sensor 48, and a sensed signal of the speed sensor 19 and a sensed signal of the pressure sensor 48 are input thereto. The storage device 81 preliminarily stores a program and various kinds of information necessary for controlling the display device 18 and the pilot pressure compensation control valve 72. The controller 80 controls the display of the display device 18 and controls the pilot pressure compensation control valve 72 based on the rotational speed (sensed signal) of the prime mover 15 sensed by the speed sensor 19 and the delivery pressure (sensed signal) of the pilot pump 41 sensed by the pressure sensor 48.

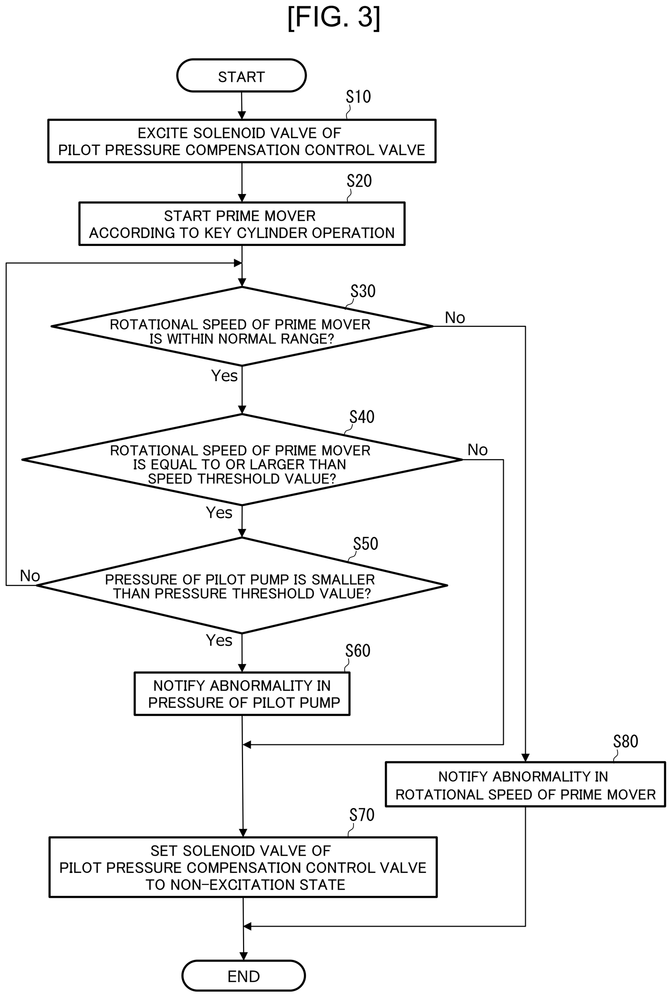

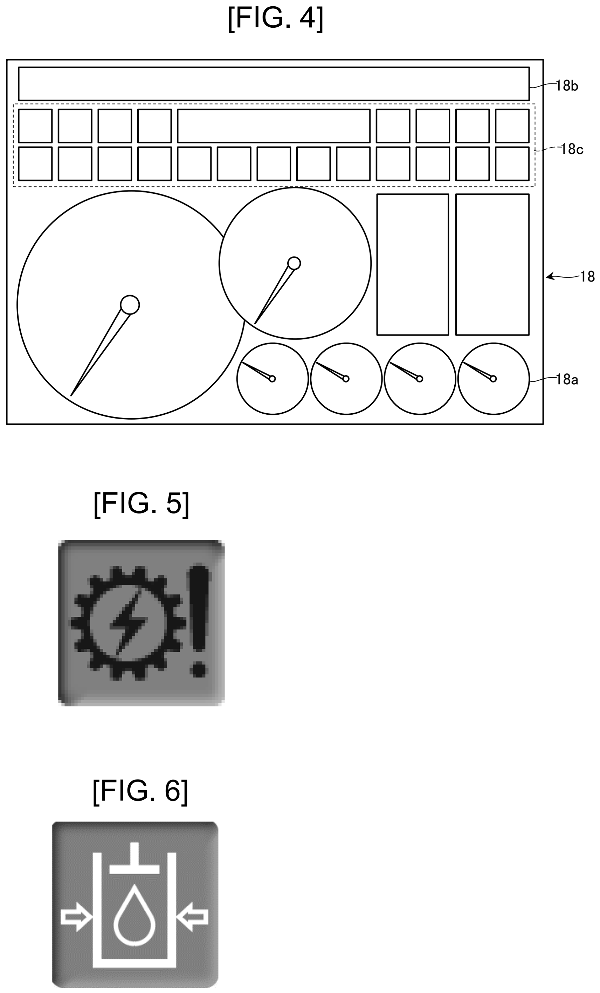

Next, an example of a control procedure of the pilot pressure compensation control valve 72 by the controller of the transport vehicle according to the first embodiment will be described by using FIG. 2 to FIG. 6. FIG. 3 is a flowchart for depicting an example of a control procedure of the pilot pressure compensation control valve in the controller of the hydraulic system of the transport vehicle according to the first embodiment depicted in FIG. 2. FIG. 4 is a schematic diagram for depicting an example of the display device of the transport vehicle according to the first embodiment depicted in FIG. 2. FIG. 5 is a diagram for depicting an example of a warning display displayed on the display device of the transport vehicle according to the first embodiment depicted in FIG. 4. FIG. 6 is a diagram for depicting another example of a warning display displayed on the display device of the transport vehicle according to the first embodiment depicted in FIG. 4.

The controller 80 of the present embodiment starts a control flow of the pilot pressure compensation control valve 72 depicted in FIG. 3 by turning on the power supply of the controller 80 (Start). First, the controller 80 outputs a control signal of an ON signal to the solenoid valve 74 configuring the pilot pressure compensation control valve 72 to excite the solenoid valve 74 (Step S10). This causes the solenoid valve 74 to be switched to an output position where the pilot pressure can be output.

Next, the controller 80 starts the prime mover 15 according to an operation of a key cylinder (not illustrated) of the dump truck 1 (Step S20), and determines whether or not the rotational speed of the prime mover 15 is within a normal range (Step S30). The normal range of the rotational speed of the prime mover 15 is preliminarily set and preliminarily stored in the storage device 81. Step S30 is a step for determining the presence or absence of an abnormality when the prime mover 15 is started. Specifically, it is determined whether or not the sensed value of the speed sensor 19 is within a normal range. When the sensed value of the speed sensor 19 is within the normal range (YES), the flow proceeds to Step S40, and when the sensed value of the speed sensor 19 is out of the normal range (NO), the flow proceeds to Step S80.

When the rotational speed of the prime mover 15 is out of the normal range (NO) in Step S30, the controller 80 notifies an abnormality in the rotational speed of the prime mover 15 (Step S80). After notifying the abnormality in the prime mover 15, the control flow is terminated.

The controller 80 controls the display device 18 such that, for example, the display device 18 displays a warning display for warning of the abnormality in the prime mover 15. For example, as depicted in FIG. 4, the display device 18 has instruments 18a, a message display section 18b, a lamp lighting section 18c, and the like. The warning display for warning of the abnormality in the prime mover 15 is, for example, the warning display depicted in FIG. 5, and is displayed on the message display section 18b of the display device 18. It should be noted that it is also possible to control the lamp lighting section 18c so as to light a lamp.

On the other hand, when it is determined in Step S30 that the rotational speed of the prime mover 15 is within the normal range (YES), the controller 80 determines whether the rotational speed of the prime mover 15 is equal to or larger than a speed threshold value (Step S40). The speed threshold value is a predetermined value based on such a rotational speed of the prime mover 15 that the delivery pressure of the pilot pump 41 is equal to or larger than a pressure threshold value to be described later, and is preliminarily stored in the storage device 81. That is, Step S40 is a step for determining whether the rotational speed of the prime mover 15 for driving the pilot pump 41 has reached the rotational speed at which the pilot pump 41 can supply a pressure required for the pilot circuit 40. Specifically, it is determined whether the sensed value of the speed sensor 19 is equal to or larger than the speed threshold value. When the sensed value of the speed sensor 19 is equal to or larger than the speed threshold value (YES), the flow proceeds to Step S50, and when the sensed value of the speed sensor 19 is smaller than the speed threshold value (NO), the flow proceeds to Step S70.

When it is determined in Step S40 that the rotational speed of the prime mover 15 is equal to or larger than the speed threshold value (YES), the controller 80 determines whether the delivery pressure of the pilot pump 41 is smaller than the pressure threshold value (Step S50). The pressure threshold value is a predetermined value based on the minimum pressure required for the pilot circuit 40 (pressure that secures a pilot pressure at which switching control of the first control valve 31 and the second control valve 32 of the hoist control valve device 30 is possible), and is preliminarily stored in the storage device 81. Specifically, it is determined whether the sensed value of the pressure sensor 48 is smaller than the pressure threshold value. When the sensed value of the pressure sensor 48 is smaller than the pressure threshold value (YES), the flow proceeds to Step S60, and when the sensed value of the pressure sensor 48 is equal to or larger than the pressure threshold value (NO), the flow returns to Step S30.

When it is determined in Step S50 that the delivery pressure of the pilot pump 41 is equal to or larger than the pressure threshold value (NO), the prime mover 15 and the pilot pump 41 are normally functioning. When the functions of the prime mover 15 and the pilot pump 41 are normally maintained, the processing of Steps S30 to S50 is repeated. At this time, the pressure from the pilot pump 41 (pilot circuit 40) depicted in FIG. 2 is input as the pilot pressure to the pressure-receiving section 73b of the selector valve 73 via the connection line 71 and via the solenoid valve 74 in the excited state (output position) of the pilot pressure compensation control valve 72, and the selector valve 73 is in a state of being switched to the closed position C. That is, the pilot pressure compensation control valve 72 is at the interruption position, and the connection between the steering circuit 52 and the pilot circuit 40 is interrupted.

On the other hand, when it is determined in Step S50 that the delivery pressure of the pilot pump 41 is smaller than the pressure threshold value (YES), the controller 80 notifies an abnormality in the pressure of the pilot pump 41 (pilot circuit 40) (Step S60). For example, the controller 80 controls the display device 18 so as to display a warning display for warning of the abnormality in the pressure of the pilot pump 41. The warning display for warning of the abnormality in the pressure of the pilot pump 41 is, for example, the warning display depicted in FIG. 6, and is displayed on the message display section 18b of the display device 18 depicted in FIG. 4. It should be noted that it is also possible to control the lamp lighting section 18c so as to light a lamp.

After execution of the processing of Step S60 or when it is determined in Step S40 that the rotational speed of the prime mover 15 is smaller than the speed threshold value (NO), the controller 80 switches the pilot pressure compensation control valve 72 to the supply position (Step S70). Specifically, the controller 80 outputs a control signal of an OFF signal to the solenoid valve 74 of the pilot pressure compensation control valve 72 (the output of the excitation current is stopped), and sets the solenoid valve 74 to a non-excitation state. Accordingly, since the solenoid valve 74 is switched to a position where the pressure-receiving section 73b of the selector valve 73 is connected to the hydraulic operating fluid tank 23, the input of the pilot pressure from the pilot pump 41 to the pressure-receiving section 73b of the selector valve 73 via the connection line 71 is interrupted by the solenoid valve 74. As a result, the selector valve 73 is switched to the open position O.

For example, when the prime mover 15 and the pilot pump 41 are in a normal state and the processing of Steps S30 to S50 is being repeated, if an abnormality occurs in the prime mover 15 (NO in Step S40) or an abnormality occurs in the pilot pump 41 (YES in Step S50), the pilot pressure for driving the first control valve 31 and the second control valve 32 of the hoist control valve device 30 cannot be secured. This is a situation where the original function of the pilot hydraulic fluid source for the first control valve 31 and the second control valve 32 is lost. In a case where the loss of the function of the pilot hydraulic fluid source occurs when the vessel 5 is in a rising state (releasing posture), the dump truck 1 becomes an unstable posture.

At this time, if the controller 80 switches the pilot pressure compensation control valve 72 to the supply position (the selector valve 73 to the open position O) in Step S70, the pressure stored in the accumulator 61 of the steering circuit 52 can be reduced by the restrictor 73a of the selector valve 73 and be supplied to the pilot circuit 40. That is, even where the original function of the pilot hydraulic fluid source is lost for the first control valve 31 and the second control valve 32 of the hoist control valve device 30, the accumulator 61 of the steering circuit 52 can be used as the emergency pilot hydraulic fluid source by the switching control of the pilot pressure compensation control valve 72 (selector valve 73). Therefore, if the operator switches the operation device 17 for the vessel 5 in the cab 13 to the floating operation position, the pilot pressure can be input from the solenoid valve 43 of the pilot circuit 40 to the other pressure-receiving section 31b of the first control valve 31 of the hoist control valve device 30 by using the accumulator 61 as the pilot hydraulic fluid source.

Accordingly, since the first control valve 31 is switched to the floating position F, the return fluid is discharged from the bottom chambers 22a of the hoist cylinders 22 in the extended state to the hydraulic operating fluid tank 23 via the first control valve 31 at the floating position F by the own weight of the vessel 5. As a result, the hoist cylinders 22 in the extended state are contracted, and the vessel 5 is changed to the falling transport posture.

As described above, by switching the pilot pressure compensation control valve 72 to the supply position (the selector valve 73 to the open position O) in the present embodiment, the accumulator 61 of the steering circuit 52 is used as the emergency pilot hydraulic fluid source for the pilot circuit 40. Accordingly, the operator can perform the switching control of the hoist control valve device 30 by operating the operation device 17 in the cab 13 without moving outside the cab 13.

As described above, the dump truck 1 (transport vehicle) according to the first embodiment includes the first hydraulic pump 21 and the second hydraulic pump 51 as hydraulic fluid sources for supplying hydraulic fluid, the hoist cylinders 22 that are extended and contracted by supply and discharge of the hydraulic fluid to allow the vessel 5 to rise and fall, the hydraulic pilot type hoist control valve device 30 (first control valve device) that has a plurality of switching positions switched according to an operation of the operation device 17 arranged in the operation room 13 and controls the flow of the hydraulic fluid supplied from the first hydraulic pump 21 (hydraulic fluid source) to the hoist cylinders 22 and the flow of the return fluid from the hoist cylinders 22 to the hydraulic operating fluid tank 23, the pilot circuit 40 that generates the pilot pressure for driving the hoist control valve device 30 (first control valve device) from the pilot pump 41 as the pilot hydraulic fluid source according to the operation of the operation device 17 and inputs the pilot pressure to the hoist control valve device (first control valve device), and the steering circuit 52 including the steering cylinders 53 and 54 that are extended and contracted by the hydraulic fluid supplied from the second hydraulic pump 51 (hydraulic fluid source) to steer the front wheels 2 (steered wheels) and the accumulator 61 that stores the pressure of the hydraulic fluid supplied from the second hydraulic pump 51 (hydraulic fluid source) and is capable of using the stored pressure as the emergency hydraulic fluid source for the steering cylinders 53 and 54. The dump truck 1 (transport vehicle) includes the connection line 71 for connecting the steering circuit 52 and the pilot circuit 40 to each other, and the pilot pressure compensation control valve 72 (second control valve device) provided on the connection line 71. The pilot pressure compensation control valve 72 (second control valve device) is configured to be switched between the interruption position C where supply of the hydraulic fluid from the accumulator 61 of the steering circuit 52 to the pilot circuit 40 is interrupted and the supply position O where the supply of the hydraulic fluid from the accumulator 61 to the pilot circuit 40 is allowed.

According to this configuration, since the pilot pressure compensation control valve 72 (second control valve device) is provided on the connection line 71 for connecting the steering circuit 52 and the pilot circuit 40 to each other, even if the pilot pump 41 that is the original pilot hydraulic fluid source of the pilot circuit 40 loses the function thereof, the accumulator 61 of the steering circuit 52 can be temporarily used as the pilot hydraulic fluid source of the pilot circuit 40 by switching the pilot pressure compensation control valve 72 (second control valve device) to the supply position. Therefore, even if the function of the pilot pump 41 that is the original pilot hydraulic fluid source used for driving the hoist control valve device 30 (first control valve device) is lost, the operator can perform the switching operation of the hoist control valve device 30 (first control valve device) by the operation device 17 in the operation room 13.

In addition, in the present embodiment, the pilot pressure compensation control valve 72 (second control valve device) is provided on the connection line 71, and has the pilot hydraulic type selector valve 73 that is switched between the closed position C where the connection line 71 is closed and the open position O where communication of the connection line 71 is established, and the solenoid valve 74 capable of switching between input of the pilot pressure to the selector valve 73 and interruption of the input.

According to this configuration, since the solenoid valve 74 is a valve that outputs the pilot pressure for driving the selector valve 73, the excitation current of the solenoid valve 74 can be lowered and the power consumption can be reduced as compared with a solenoid valve used for a main hydraulic circuit. Further, the size of the valve can be reduced.

In addition, in the present embodiment, the pilot pressure compensation control valve 72 (second control valve device) has the restrictor 73a at the supply position.

According to this configuration, when a pressure is supplied from the accumulator 61 of the steering circuit 52 to the pilot circuit 40 via the pilot pressure compensation control valve 72, the high pressure of the accumulator 61 is reduced by the restrictor 73a, and thus the pilot circuit 40 can be protected.

In addition, the dump truck 1 (transport vehicle) according to the present embodiment includes the pressure sensor 48 for sensing the pressure of the pilot pump 41 (pilot hydraulic fluid source) and the controller 80 for controlling the pilot pressure compensation control valve 72 (second control valve device). The controller 80 controls the pilot pressure compensation control valve 72 (second control valve device) to the interruption position C when the sensed value of the pressure sensor 48 is equal to or larger than the preset pressure threshold value, and controls the pilot pressure compensation control valve 72 (second control valve device) to the supply position O when the sensed value of the pressure sensor 48 is smaller than the pressure threshold value.

According to this configuration, when an abnormality in the pilot pump 41 (pilot hydraulic fluid source) is detected on the basis of the sensed value of the pressure sensor 48, the pilot pressure compensation control valve 72 (second control valve device) is switched from the interruption position C to the supply position O without an operation by the operator, and thus the operator can change the posture of the vessel 5 only by operating the operation device 17 when the abnormality occurs in the pilot pump 41 (pilot hydraulic fluid source).

In addition, in the present embodiment, the pilot hydraulic fluid source is the pilot pump 41 driven by the prime mover 15. The dump truck 1 (transport vehicle) includes the speed sensor 19 for sensing the rotational speed of the prime mover 15 and the controller 80 for controlling the pilot pressure compensation control valve 72 (second control valve device). The controller 80 is configured to control the pilot pressure compensation control valve 72 (second control valve device) to the supply position O in a case where the sensed value of the speed sensor 19 is smaller than the preset speed threshold value.

According to this configuration, when an abnormality in the prime mover 15 is detected on the basis of the sensed value of the speed sensor 19, the pilot pressure compensation control valve 72 (second control valve device) is switched to the supply position O without an operation by the operator, and thus the operator can change the posture of the vessel 5 only by operating the operation device 17 when a normal pilot pressure cannot be generated from the pilot pump 41 due to the abnormality in the prime mover 15.

In addition, in the present embodiment, the controller 80 is configured to control the pilot pressure compensation control valve 72 (second control valve device) to the interruption position C when the sensed value of the speed sensor 19 is equal to or larger than the speed threshold value and when the sensed value of the pressure sensor 48 is equal to or larger than the pressure threshold value.

According to this configuration, when the prime mover 15 and the pilot pump 41 are normally operated, the connection between the steering circuit 52 and the pilot circuit 40 is interrupted by the pilot pressure compensation control valve 72 (second control valve device). This allows the steering circuit 52 and the pilot circuit 40 to be prevented from exerting influence on each other.

### [Second Embodiment]

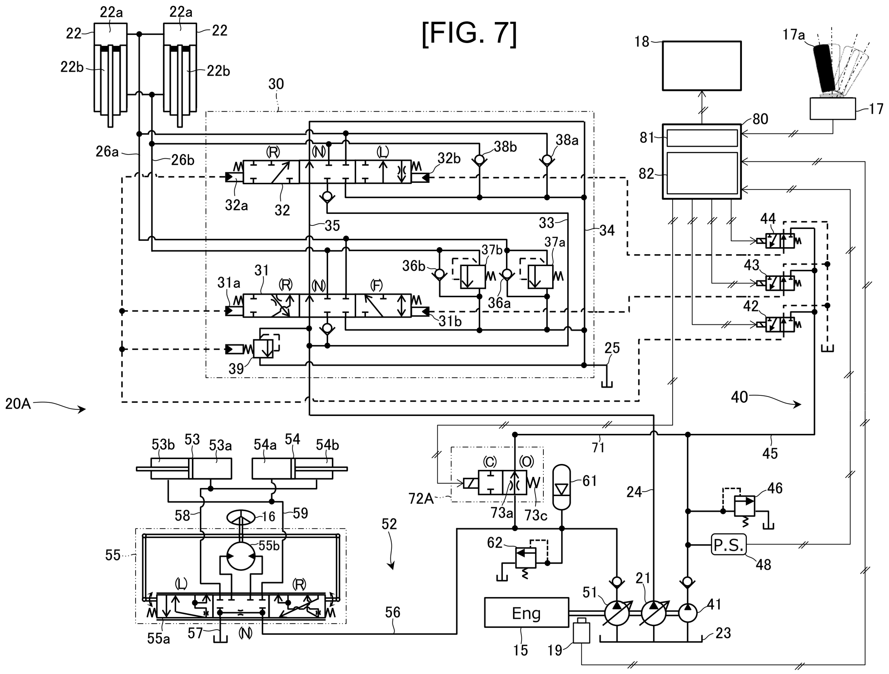

Next, a transport vehicle according to a second embodiment of the present invention will be described by using FIG. 7. FIG. 7 is a hydraulic circuit diagram for depicting a configuration of a hydraulic system provided in the transport vehicle according to the second embodiment.

It should be noted that in FIG. 7, parts having the same reference numerals as those depicted in FIG. 1 to FIG. 6 are similar parts, and thus the detailed description thereof will be omitted.

The transport vehicle according to the second embodiment differs from the first embodiment in that configurations of a pilot pressure compensation control valve 72A of a hydraulic system 20A is different. Other configurations of the hydraulic system 20A of the transport vehicle according to the second embodiment are similar to those of the hydraulic system 20 (see FIG. 2) of the first embodiment, and thus the description thereof will be omitted.

Specifically, the pilot pressure compensation control valve 72A is configured with only one solenoid selector valve provided on the connection line 71, and does not include any other valve mechanisms. The solenoid selector valve 72A is configured to be switched between a supply position where supply of the hydraulic fluid from the steering circuit 52 to the pilot circuit 40 is allowed, that is, an open position O where communication of the connection line 71 is established, and an interruption position where the supply of the hydraulic fluid from the steering circuit 52 to the pilot circuit 40 is interrupted, that is, a closed position C where the connection line 71 is closed. As similar to the first embodiment, the pilot pressure compensation control valve 72A also enables the accumulator 61 of the steering circuit 52 to be used as the emergency pilot hydraulic fluid source for the pilot circuit 40 when the pilot pump 41 that is the original pilot hydraulic fluid source of the pilot circuit 40 loses the function thereof.

The solenoid selector valve 72A has a restrictor 73a at the open position O (supply position). As similar to the first embodiment, the restrictor 73a of the solenoid selector valve 72A reduces the pressure of the high-pressure hydraulic fluid stored in the accumulator 61 and supplies it to the pilot circuit 40. The solenoid selector valve 72A has a spring 73c on one side. The solenoid selector valve 72A is switched between the open position O and the closed position C according to a control signal (excitation current) from the controller 80. The solenoid selector valve 72A is, for example, a normally-open solenoid valve. That is, the solenoid selector valve 72A is configured to be switched to the open position O when a standby control signal (OFF signal) is input from the controller 80, and to be switched to the closed position C when a driving control signal (ON signal) is input.

It should be noted that the switching control of the controller 80 for the pilot pressure compensation control valve 72A of the present embodiment is similar to the switching control for the pilot pressure compensation control valve 72 of the first embodiment. That is, when the control flow (see FIG. 3) by the controller 80 is started, the solenoid selector valve (pilot pressure compensation control valve) 72A is switched to the closed position C (interruption position) by an ON signal from the controller 80 (Step S10 depicted in FIG. 3). In addition, in a case where an abnormality occurs in the prime mover 15 (in the case of NO in Step S40 depicted in FIG. 3) or in a case where an abnormality occurs in the pilot pump 41 (in the case of YES in Step S50 depicted in FIG. 3), the solenoid selector valve (pilot pressure compensation control valve) 72A is switched to the open position O (supply position) by an OFF signal from the controller 80 (Step S70 depicted in FIG. 3). Thus, even in the present embodiment, as similar to the first embodiment, even where the original function of the pilot hydraulic fluid source is lost for the first control valve 31 and the second control valve 32 of the hoist control valve device 30, the accumulator 61 of the steering circuit 52 can be used as the emergency pilot hydraulic fluid source for the pilot circuit 40 by switching the pilot pressure compensation control valve 72A to the supply position (open position O).

According to the transport vehicle of the above-described second embodiment, since the pilot pressure compensation control valve 72A (second control valve device) is provided on the connection line 71 for connecting the steering circuit 52 and the pilot circuit 40 to each other as similar to the above-described first embodiment, even if the pilot pump 41 that is the original pilot hydraulic fluid source of the pilot circuit 40 loses the function thereof, the accumulator 61 of the steering circuit 52 can be temporarily used as the pilot hydraulic fluid source of the pilot circuit 40 by switching the pilot pressure compensation control valve 72A (second control valve device) to the supply position O. Therefore, even if the function of the pilot pump 41 that is the original pilot hydraulic fluid source used for driving the hoist control valve device 30 (first control valve device) is lost, the operator can perform the switching operation of the hoist control valve device 30 (first control valve device) by the operation device 17 in the operation room 13.

In addition, in the present embodiment, the pilot pressure compensation control valve 72A (second control valve device) of the hydraulic system 20A is provided on the connection line 71, and has the solenoid type selector valve that is switched between the closed position C where the connection line 71 is closed and the open position O where communication of the connection line 71 is established.

According to this configuration, since the pilot pressure compensation control valve 72A (second control valve device) is configured with one valve mechanism, the number of parts of the pilot pressure compensation control valve 72A can be reduced as compared with the first embodiment.

### [Another embodiment]

It should be noted that the present invention is not limited to the first and second embodiments described above, but includes various modified examples. The above-described embodiments have been described in detail for the purpose of clearly explaining the present invention, and are not necessarily limited to those having all the described configurations. For example, a part of a configuration of an embodiment can be replaced with a configuration of another embodiment, or a configuration of an embodiment can be added to a configuration of another embodiment. In addition, a part of a configuration of each embodiment can be added to, deleted from, or replaced with another configuration.

For example, in the first and second embodiments described above, an example of a configuration in which the hoist control valve device 30 includes two control valves of the first control valve 31 and the second control valve 32 is depicted. However, the hoist control valve device can be configured with a single directional control valve. In this case, the hoist control valve device can be configured with, for example, a hydraulic pilot type control valve having six ports and four positions. This single control valve may be configured to have four switching positions of a neutral position as a holding position, a raising position, a lowing position, and a floating position.

### Description of Reference Characters

1: dump truck (transport vehicle)
2: front wheel (steered wheel)
5: vessel
13: cab (operation room)
17: operation device
19: speed sensor
21: first hydraulic pump (hydraulic fluid source)
22: hoist cylinder
23: hydraulic operating fluid tank
30: hoist control valve device (first control valve device)
40: pilot circuit
41: pilot pump (pilot hydraulic fluid source)
48: pressure sensor
51: second hydraulic pump (hydraulic fluid source)
52: steering circuit
53, 54: steering cylinder
61: accumulator
71: connection line
72: pilot pressure compensation control valve (second control valve device)
73: selector valve
73a: restrictor
74: solenoid valve
72A: pilot pressure compensation control valve (second control valve device, solenoid type selector valve)
80: controller

## Claims

1. A transport vehicle comprising:
a hydraulic fluid source that supplies hydraulic fluid;
a hoist cylinder that is extended and contracted by supply and discharge of the hydraulic fluid to allow a vessel to rise and fall;
a hydraulic pilot type first control valve device that has a plurality of switching positions switched according to an operation of an operation device arranged in an operation room and controls a flow of the hydraulic fluid supplied from the hydraulic fluid source to the hoist cylinder and a flow of return fluid from the hoist cylinder to a hydraulic operating fluid tank;
a pilot circuit that generates a pilot pressure for driving the first control valve device from a pilot hydraulic fluid source according to the operation of the operation device and inputs the pilot pressure to the first control valve device;
a steering circuit including a steering cylinder that is extended and contracted by the hydraulic fluid supplied from the hydraulic fluid source to steer a steered wheel, and an accumulator that stores a pressure of the hydraulic fluid supplied from the hydraulic fluid source and is capable of using the stored pressure as an emergency hydraulic fluid source for the steering cylinder, wherein
the transport vehicle includes
a connection line that connects the steering circuit and the pilot circuit to each other,
a second control valve device that is provided on the connection line and is switched between an interruption position where supply of the hydraulic fluid from the accumulator to the pilot circuit is interrupted and a supply position where the supply of the hydraulic fluid from the accumulator to the pilot circuit is allowed, and
a controller that controls the second control valve device based on a state of the pilot hydraulic fluid source.

2. The transport vehicle according to claim 1, wherein
the second control valve device has
a pilot hydraulic type selector valve that is provided on the connection line and is switched between a closed position where the connection line is closed and an open position where communication of the connection line is established, and
a solenoid valve capable of switching between input of the pilot pressure to the selector valve and interruption of the input.

3. The transport vehicle according to claim 1, wherein
the second control valve device has a solenoid type selector valve that is provided on the connection line and is switched between a closed position where the connection line is closed and an open position where communication of the connection line is established.

4. The transport vehicle according to claim 1, wherein
the second control valve device has a restrictor at the supply position.

5. The transport vehicle according to claim 1, comprising a pressure sensor for sensing a pressure of the pilot hydraulic fluid source, wherein
the controller is configured to
control the second control valve device to the interruption position when a sensed value of the pressure sensor is equal to or larger than a preset pressure threshold value, and
control the second control valve device to the supply position when the sensed value of the pressure sensor is smaller than the pressure threshold value.

6. The transport vehicle according to claim 1, wherein
the pilot hydraulic fluid source is a pilot pump driven by a prime mover,
the transport vehicle comprises a speed sensor for sensing a rotational speed of the prime mover, and
the controller is configured to control the second control valve device to the supply position when a sensed value of the speed sensor is smaller than a preset speed threshold value.

7. The transport vehicle according to claim 6, comprising a pressure sensor for sensing a pressure of the pilot hydraulic fluid source, wherein
the controller is configured to control the second control valve device to the interruption position when the sensed value of the speed sensor is equal to or larger than the speed threshold value and when a sensed value of the pressure sensor is equal to or larger than a preset pressure threshold value.
